# EUROPEAN PATENT APPLICATION

(11) **EP 2 894 567 A1**
(43) Date of publication of application: **15.07.2015**
(21) Application number: 14789762.3
(22) Date of filing: 27.05.2014
(51) Int. Cl.: G06F 12/02

(54) **DATA COPY MANAGEMENT DEVICE AND DATA COPY METHOD THEREOF**

(30) Priority: 08.11.2013 CN 201310557278
(71) Applicant: Huawei Technologies Co., Ltd., Longgang District Shenzhen, Guangdong 518129 (CN)
(72) Inventor: REN, Nunu, Shenzhen Guangdong 518129 (CN); JIN, Tianfu, Shenzhen Guangdong 518129 (CN); LI, Mingjun, Shenzhen Guangdong 518129 (CN)
(74) Representative: Haley, Stephen
(86) International application number: PCT/CN2014/078475
(87) International publication number: WO 2015/067035

(57) **Abstract**

The present invention provides a data copy management apparatus and a data copy method thereof. The data copy method includes: obtaining, by using a hash algorithm, hash values of multiple source data blocks obtained by dividing source data; sending the hash values to a target storage side, so that the target storage side determines, based on the received hash values, whether the target storage side directly generates the source data blocks or a source storage side sends the source data blocks to the target storage side; ignoring the source data blocks when a first feedback fed back by the target storage side is received; and sending the source data blocks to the target storage side when a second feedback fed back by the target storage side is received. In the present invention, a speed of copying a special data block can be improved in the foregoing manner, thereby saving CPU and network resources and reducing copy time.

## Description

This application claims priority to Chinese Patent Application No. 201310557278.4, filed with the Chinese Patent Office on November 8, 2013 and entitled "DATA COPY MANAGEMENT APPARATUS AND DATA COPY METHOD THEREOF", which is incorporated herein by reference in its entirety.

### TECHNICAL FIELD

The present invention relates to the field of data copy technologies, and in particular, to a data copy management apparatus and a data copy method thereof.

### BACKGROUND

At present, with ever-increasing requirements of various terminals and communications services, it becomes increasingly frequent to copy source data from one physical storage to another physical storage or from one virtual storage to another virtual storage. Because a CPU (Central Processing Unit, central processing unit) and IOPS (Input/Output Operations Per Second, input/output operations per second) of a physical storage are limited when multiple data copy processes are performed simultaneously, to reduce copy time caused by this limitation has become a significant means for operators to improve competitiveness.

In the prior art, it is widely used that a vStorage APIs for Array Integration (vStorage API for Array Integration, VAAI) technology is used between a source storage side and a target storage side. The technology is mainly as follows: a VAAI specific interface is implemented for each of the source storage side and the target storage side, so that an upper-layer application can invoke the VAAI specific interface, and storing operations such as data copying are implemented by a storage array, to reduce resource consumption on a host side. However, in the technology, all data on the source storage side is directly copied, which causes a relatively low copy speed and a long copy time during data copying.

### SUMMARY

In view of the above, embodiments of the present invention provide a data copy management apparatus and a data copy method thereof, which are used to improve a speed of copying a special data block and reduce copy time.

According to a first aspect, a data copy method is provided, where the method is used for copying source data on a source storage side to a target storage side, and includes: dividing the source data on the source storage side into multiple source data blocks; obtaining a hash value of each source data block by using a hash algorithm; sending the hash values to the target storage side, so that the target storage side determines, based on the received hash values, whether the target storage side directly generates the source data blocks or the source storage side sends the source data blocks to the target storage side; receiving a feedback from the target storage side; ignoring the source data blocks if the feedback is a first feedback that the target storage side directly generates the source data blocks; and sending the source data blocks to the target storage side if the feedback is a second feedback that the source storage side sends the source data blocks to the target storage side.

With reference to an implementation manner of the first aspect, in a first possible implementation manner, after the step of obtaining a hash value of each source data block by using a hash algorithm, the method includes: generating, according to the hash values, a hash file corresponding to the source data, where the hash file is a set of the hash values of the multiple source data blocks; and a step of sending the hash values to the target storage side includes: sending the hash file to the target storage side.

With reference to an implementation manner of the first aspect, in a second possible implementation manner, the step of sending the hash values to the target storage side includes: sending the hash values to the target storage side, so that the target storage side determines whether the received hash values are the same as a hash value of a predefined special data block; if the received hash values are the same as the hash value of the predefined special data block, determining that the target storage side directly generates the source data blocks; and if the received hash values are different from the hash value of the predefined special data block, determining that the source storage side sends the source data blocks to the target storage side.

With reference to the second possible implementation manner of the first aspect, in a third possible implementation manner, the predefined special data block is an all-0 data block or an all-1 data block.

With reference to an implementation manner of the first aspect, in a fourth possible implementation manner, the step of sending the hash values to the target storage side includes: determining, by the target storage side, whether the received hash values are the same as a hash value of a local data block stored on the target storage side; if the received hash values are the same as the hash value of the local data block stored on the target storage side, determining that the target storage side directly generates the source data blocks; and if the received hash values are different from the hash value of the local data block stored on the target storage side, determining that the source storage side sends the source data blocks to the target storage side.

According to a second aspect, a data copy management apparatus is provided, where the apparatus is configured to copy source data on a source storage side to a target storage side, and includes: a dividing module, configured to divide the source data on the source storage side into multiple source data blocks; a hash computation module, configured to obtain a hash value of each source data block by using a hash algorithm; a sending module, configured to send the hash values to the target storage side, so that the target storage side determines, based on the hash values, whether the target storage side directly generates the source data blocks or the source storage side sends the source data blocks to the target storage side; a receiving module, configured to receive a feedback from the target storage side; and a copy management module, configured to ignore the source data blocks if the feedback is a first feedback that the target storage side directly generates the source data blocks, and control the sending module to send the source data blocks to the target storage side if the feedback is a second feedback that the source storage side sends the source data blocks to the target storage side.

With reference to an implementation manner of the second aspect, in a first possible implementation manner, the hash computation module is further configured to generate, according to the obtained hash values, a hash file corresponding to the source data, where the hash file is a set of the hash values of the multiple source data blocks; and the sending module is configured to send the hash file to the target storage side.

According to a third aspect, a data copy method is provided, where the method is used for copying source data on a source storage side to a target storage side, and includes: receiving hash values of source data blocks obtained by dividing the source data on the source storage side; determining, based on the received hash values, whether the target storage side directly generates the source data blocks or the source storage side sends the source data blocks to the target storage side; if it is determined that the target storage side directly generates the source data blocks, generating, by the target storage side, the source data blocks directly, and sending a first feedback to the source storage side to instruct the source storage side to ignore the source data blocks; and if it is determined that the source storage side sends the source data blocks to the target storage side, sending a second feedback to the source storage side to instruct the source storage side to send the source data blocks to the target storage side.

With reference to an implementation manner of the third aspect, in a first possible implementation manner, a step of receiving hash values of source data blocks obtained by dividing the source data on the source storage side includes: receiving a hash file, where the hash file is a set of the hash values of the multiple source data blocks obtained by dividing the source data on the source storage side.

With reference to an implementation manner of the third aspect, in a second possible implementation manner, a step of determining, based on the received hash values, whether the target storage side directly generates the source data blocks or the source storage side sends the source data blocks to the target storage side includes: determining whether the received hash values are the same as a hash value of a predefined special data block; if the received hash values are the same as the hash value of the predefined special data block, determining that the target storage side directly generates the source data blocks; and if the received hash values are different from the hash value of the predefined special data block, determining that the source storage side sends the source data blocks to the target storage side.

With reference to the second possible implementation manner of the third aspect, in a third possible implementation manner, the predefined special data block is an all-0 data block or an all-1 data block.

With reference to the second possible implementation manner of the third aspect, in a fourth possible implementation manner, the step of determining, based on the received hash values, whether the target storage side directly generates the source data blocks or the source storage side sends the source data blocks to the target storage side includes: determining whether the received hash values are the same as a hash value of a local data block stored on the target storage side; if the received hash values are the same as the hash value of the local data block stored on the target storage side, determining that the target storage side directly generates the source data blocks; and if the received hash values are different from the hash value of the local data block stored on the target storage side, determining that the source storage side sends the source data blocks to the target storage side.

With reference to the second possible, the third possible, or the fourth possible implementation manner of the third aspect, in a fifth possible implementation manner, a step of directly generating, by the target storage side, the source data blocks includes: copying the predefined special data block or the stored local data block to a predetermined storage area of the source data blocks or modifying metadata information in a data de-duplication record on the target storage side, to record a mapping relationship between the predetermined storage area of the source data blocks and the predefined data block or record a mapping relationship between the predetermined storage area of the source data blocks and the stored local data block.

According to a fourth aspect, a data copy management apparatus is provided, where the apparatus is configured to copy source data on a source storage side to a predetermined storage area of a target storage side, and includes: a receiving module, configured to receive hash values of source data blocks obtained by dividing the source data on the source storage side; a processing module, configured to determine, based on the hash values received by the receiving module, whether the target storage side directly generates the source data blocks or the source storage side sends the source data blocks to the target storage side; a sending module, configured to send a feedback to the source storage side; and a copy management module, configured to: when the processing module determines that the target storage side directly generates the source data blocks, directly generate the source data blocks and control the sending module to send a first feedback to the source storage side to instruct the source storage side to ignore the source data blocks, and when the processing module determines that the source storage side sends the source data blocks to the target storage side, control the sending module to send a second feedback to the source storage side to instruct the source storage side to send the source data blocks to the receiving module.

With reference to an implementation manner of the fourth aspect, in a first possible implementation manner, the receiving module is further configured to receive a hash file, where the hash file is a set of the hash values of the multiple source data blocks obtained by dividing the source data on the source storage side.

With reference to an implementation manner of the fourth aspect, in a second possible implementation manner, the processing module is further configured to: determine whether the received hash values are the same as a hash value of a predefined special data block; if the received hash values are the same as the hash value of the predefined special data block, determine that the target storage side directly generates the source data blocks; and if the received hash values are different from the hash value of the predefined special data block, determine that the source storage side sends the source data blocks to the target storage side.

With reference to the second possible implementation manner of the fourth aspect, in a third possible implementation manner, the predefined special data block is an all-0 data block or an all-1 data block.

With reference to an implementation manner of the fourth aspect, in a fourth possible implementation manner, the processing module is further configured to: determine whether the received hash values are the same as a hash value of a local data block stored on the target storage side; if the received hash values are the same as the hash value of the local data block stored on the target storage side, determine that the target storage side directly generates the source data blocks; and if the received hash values are different from the hash value of the local data block stored on the target storage side, determine that the source storage side sends the source data blocks to the target storage side.

With reference to the second possible, the third possible, or the fourth possible implementation manner of the fourth aspect, in a fifth possible implementation manner, the processing module is further configured to copy the predefined special data block or the stored local data block to a predetermined storage area of the source data blocks or modify metadata information in a data de-duplication record on the target storage side, to record a mapping relationship between the predetermined storage area of the source data blocks and the predefined data block or record a mapping relationship between the predetermined storage area of the source data blocks and the stored local data block.

Beneficial effects of the present invention are as follows: Distinguished from the prior art, in the present invention, a hash algorithm is adopted to obtain hash values of multiple source data blocks obtained by dividing source data; the hash values are sent to a target storage side, so that the target storage side determines, based on the received hash values, whether the target storage side directly generates the source data blocks or a source storage side sends the source data blocks to the target storage side; if a first feedback that the target storage side directly generates the source data blocks is received, where the first feedback is fed back by the target storage side, the source data blocks are ignored; and if a second feedback that the source storage side sends the source data blocks is received, where the second feedback is fed back by the target storage side, the source data blocks are sent to the target storage side. The source data is copied by classification, thereby improving a copy speed and reducing copy time.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a data copy method according to a first embodiment of the present invention;
FIG. 2 is a principle block diagram of a data copy management apparatus according to a first embodiment of the present invention;
FIG. 3 is a principle block diagram of a data copy management apparatus according to a fourth embodiment of the present invention;
FIG. 4 is a principle block diagram of a data copy management apparatus according to a fifth embodiment of the present invention; and
FIG. 5 is a principle block diagram of a data copy management apparatus according to a sixth embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts, such as mutual combination of technical features among different embodiments, shall fall within the protection scope of the present invention.

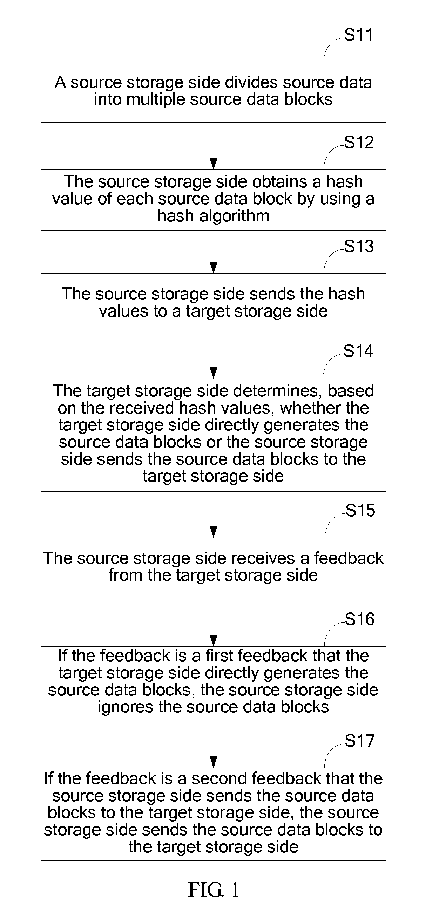

The present invention provides a data copy method. Referring to FIG. 1, a flowchart of a data copy method according to a first embodiment of the present invention, the data copy method in this embodiment is used for copying source data on a source storage side to a target storage side, where the source storage side and the target storage side may be physical storage medium entities or may also be virtual storages that are corresponding to physical storage media and are deployed by using a virtual machine management system. When the source storage side and the target storage side are in different physical storage media, an instruction and the source data may be copied between the source storage side and the target storage side by using a wireless network (IP network) and a storage network; and when the source storage side and the target storage side are in a same physical storage medium, the source data may be copied by using the storage network only. In addition, the method of this embodiment is not necessarily associated with a physical machine in which a physical storage is located. That is, this embodiment is applicable to: source data copying among multiple virtual storages in a same physical storage medium in a same physical machine; source data copying among multiple virtual storages in a same physical storage medium among different physical machines; source data copying among multiple virtual storages in different physical storage media in a same physical machine; and source data copying among multiple virtual storages in different physical storage media among different physical machines.

As shown in FIG. 1, the data copy method disclosed in this embodiment includes the following:

Step S11: The source storage side divides the source data into multiple source data blocks.

When copying starts, the source storage side first determines the source data that the target storage side needs to copy, then invokes the source data from a storage of the source storage side itself, and divides the source data by using a block search algorithm and by using methods, such as depending on a storage mechanism and storage setting on an OS (Operating System, operating system), to obtain the multiple source data blocks.

Byte lengths of the multiple source data blocks may be the same or may be different. Specific byte lengths may be set as required, such as 4k or 8k. In addition, the source data in this embodiment is a segment of consecutive data content. Because currently computers generally use a binary algorithm, it is preferred that data content of the source data is binary data, and data content of each corresponding source data block is also binary data.

Step S12: The source storage side obtains a hash value of each source data block by using a hash algorithm.

Each source data block obtained in step S11, that is, each segment of binary data with an arbitrary length, is mapped, by using the hash algorithm (Hash), to relatively small binary data with a fixed length or a binary value with a fixed length, that is, a hash value. Essentially, a process of using the hash algorithm is a process of encoding relatively long data to obtain relatively short data, to facilitate quick transmission, querying, and comparison in a data copying process. In addition, based on a unique correspondence characteristic of the hash algorithm, for any two or more source data blocks, hash values of the source data blocks are the same only when data content of the source data blocks is the same; and when the data content of the source data blocks is different, each source data block only corresponds to a unique hash value.

Step S 13: The source storage side sends the hash values to the target storage side.

When the source storage side sends the hash values of the multiple source data blocks to the target storage side, because there is more than one hash value, preferably, it is necessary to follow a protocol rule or an order in which the multiple source data blocks form the source data. In this embodiment, preferably, each source data block is numbered in the order in which the source data is formed, as shown in following table:

| **Number of a Source Data Block** | **Hash Value** |
|---|---|
| 0000 | ABC123 |
| 0001 | DEF456 |
| 0002 | BCD789 |
| ... | ... |
| N-2 | BCD789 |
| N-1 | CDE345 |
| N | DEF456 |

During data division in step S11, the multiple source data blocks that are obtained by dividing the source data and are to be copied are numbered as 0000, 0001, 0002, ..., N-2, N-1, N in a division order, and the corresponding hash values are ABC123, DEF456, BCD789, ..., BCD789, CDE345, DEF456 successively. When being sent, the hash values may be sent one by one successively according to the foregoing table or may also be sent all at a time in a list manner.

It should be noted that the foregoing numbers and the corresponding hash values disclosed in this embodiment and the corresponding specific numerical values in the foregoing table are merely exemplary for description. In other embodiments, a person skilled in the art may set other numbers or values as required only if a mapping relationship between multiple source data blocks and multiple hash values is met.

Step S14: The target storage side determines, based on the received hash values, whether the target storage side directly generates the source data blocks or the source storage side sends the source data blocks to the target storage side.

Correspondingly, the target storage side receives the multiple source data blocks successively or receives all the multiple source data blocks at a time.

When the receiving is completed, the target storage side determines whether the received hash values are the same as a hash value of a predefined special data block. The predefined special data block is a source data block that has a data format and is defined as required before data is copied. In this embodiment, preferably, the special data block is an all-0 data block or an all-1 data block; certainly, the special data block may also be a data block including both 0 and 1.

If the hash values received by the target storage side are the same as the hash value of the special data block, for example, a hash value of an all-0 data block is DEF456, which is the same as the hash value DEF456 of the source data block numbered 0001 in Table 1, the target storage side reaches a determining result that the target storage side directly generates a special data block corresponding to the hash value; and preferably, the target storage side generates a first feedback according to the determining result.

If the hash values received by the target storage side are different from the hash value of the special data block, for example, a hash value of all-1 data is DFG789, which is not the same as a hash value of a source data block with any number in Table 1, the target storage side reaches a determining result that the source storage side sends a source data block corresponding to the hash value to the target storage side; and preferably, the target storage side generates a second feedback according to the determining result.

Step S15: The source storage side receives a feedback from the target storage side.

The feedback includes the first feedback and the second feedback in step S13.

Step S16: If the feedback is a first feedback that the target storage side directly generates the source data blocks, the source storage side ignores the source data blocks.

After receiving the first feedback, the source storage side ignores source data blocks corresponding to the same hash value, that is, the source storage side does not send the source data blocks to the target storage side. It should be noted that, in this case, although the target storage side directly generates special data blocks corresponding to the same hash value, the target storage side needs to insert, according to the protocol rule or an order in which data is divided, the special data blocks into storage locations corresponding to source data blocks that have not been copied, so that the target storage side can obtain correct source data when combining data.

Step S17: If the feedback is the second feedback that the source storage side sends the source data blocks to the target storage side, the source storage side sends the source data blocks to the target storage side.

After receiving the multiple source data blocks sent by the source storage side, the target storage side combines the multiple source data blocks according to the protocol rule or the order in which the data is divided, to obtain the source data that needs to be copied.

Based on the foregoing description, in the prior art, a vStorage APIs for Array Integration technology used between a source storage side and a target storage side, because it is required to set corresponding specific interfaces on both the source storage side and the target storage side, that is, development consistency is required, development complexity increases. However, in this embodiment, source data to be copied is divided, and a hash value of each source data block is obtained, that is, there is no need to consider an interface between a source storage side and a target storage side; therefore, development complexity is relatively low.

Further, in the vStorage APIs for Array Integration technology in the prior art, during data copying, a storage array directly copies all source data on the source storage side, but does not detect content of the source data. Therefore, when the source data includes specially defined data, such as all-0 data or all-1 data, replicating and copying of data that can be directly generated on the target storage side still affect a copy speed and increase copy time. However, in step S14 of this embodiment, the special data block is separated from the multiple source data blocks and is not copied but is directly generated on the target storage side, which reduces an amount of data that needs to be copied, so that the copy speed can be improved, and the copy time can be reduced. In addition, because the amount of data that needs to be copied is reduced, network resources and CPU resources can also be saved in a crossing-physical machine manner.

The present invention further provides a data copy method of a second embodiment, where the data copy method is described in detail on a basis of the data copy method disclosed in the first embodiment. Differences between this embodiment and the first embodiment shown in FIG. 1 are as follows:

In step S12, after obtaining the hash value of each source data block by using the hash algorithm, the source storage side generates, according to the hash values, a hash file corresponding to the source data, where the hash file is a set of the hash values of the multiple source data blocks. Correspondingly, in step S13, the source storage side sends the hash file to the target storage side, that is, the source storage side sends the multiple hash values to the target storage side at a time. In step S 14, the target storage side determines, based on the hash values in the received hash file, whether the target storage side directly generates the source data blocks or the source storage side sends the source data blocks to the target storage side.

The present invention further provides a data copy method of a third embodiment, where the data copy method is described in detail on the basis of the data copy method disclosed in the first embodiment. Differences between this embodiment and the first embodiment shown in FIG. 1 are as follows:

In step S 14, the target storage side itself has stored one or more data blocks, that is, local data blocks. After the hash values of the multiple data blocks are received, where the hash values are sent by the source storage side, hash values of the local data blocks are obtained by using a hash algorithm. It should be noted that the hash algorithm used in this embodiment is the same as the hash algorithm that is in step S12 of the first embodiment and is used for obtaining the hash values of the source data blocks.

Then, the target storage side determines whether the received hash values are the same as the hash values of the local data blocks. If the received hash values are the same as the hash values of the local data blocks, the target storage side reaches a determining result that the target storage side directly generates the source data blocks corresponding to the hash values; and the target storage side generates a first feedback according to the determining result. Correspondingly, in step S16, the target storage side directly copies the stored local data blocks to a predetermined storage area of source data blocks to be copied.

If the received hash values are different from the hash values of the local data blocks, the target storage side reaches a determining result that the source storage side sends the source data blocks corresponding to the hash values to the target storage side; and the target storage side generates a second feedback according to the determining result.

It should be understood that a person skilled in the art may further combine this embodiment with the data copy method of the foregoing second embodiment as required, which can classify multiple source data blocks of source data as well, so as not to copy a special data block in the multiple data blocks and simplify an amount of data that needs to be copied, thereby improving a copy speed and reducing copy time.

The present invention further provides a data copy method of a fourth embodiment, where the data copy method is described in detail on the basis of the data copy method disclosed in the first embodiment. Differences between this embodiment and the first embodiment shown in FIG. 1 are as follows:

A target storage side in this embodiment has a data de-duplication function based on a hash value, that is, after receiving hash values of multiple source data blocks sent by a source storage side, the target storage side automatically performs a data de-duplication operation for the multiple hash values. For example, data de-duplication is performed for a source data block 0002 and a source data block N-2 that are in the foregoing table and have a same hash value BCD789.

Correspondingly, in steps S16 and S17, the target storage side modifies metadata information in a data record when the data de-duplication operation is performed, to record a mapping relationship between a predetermined storage area that is on the target storage side and for source data blocks to be copied and a predefined special data block, so that the target storage side copies, according to the mapping relationship, the source data blocks to be copied to the designated predetermined storage area and combines the data blocks to obtain source data that needs to be copied.

It should be understood that a person skilled in the art may further combine this embodiment with the data copy method in the foregoing third embodiment as required, that is, in steps S16 and S17, a mapping relationship between the predetermined storage area that is on the target storage side and for the source data blocks to be copied and local data blocks that have been stored is recorded, and the source data blocks are copied according to the mapping relationship.

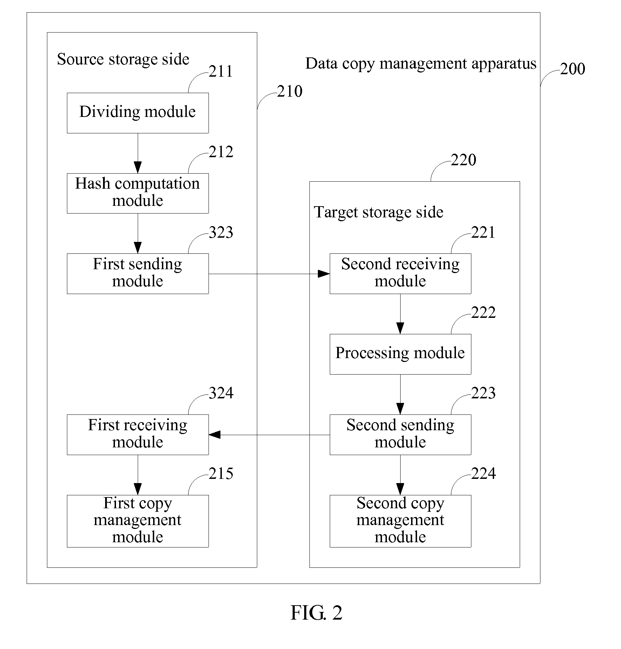

The present invention further provides a data copy management apparatus of the first embodiment. As shown in FIG. 2, the data copy management apparatus 200 disclosed in this embodiment includes a source storage side 210 and a target storage side 220, where the two storage sides may be physical storage medium entities or may also be virtual storages that are corresponding to physical storage media and are deployed by using a virtual machine management system. When the source storage side and the target storage side are in different physical storage media, an instruction and source data may be copied between the source storage side and the target storage side by using a wireless network and a storage network; and when the source storage side and the target storage side are in a same physical storage medium, the source data may be copied between the source storage side and the target storage side by using the storage network only.

The source storage side 210 includes a dividing module 211, a hash computation module 212, a first sending module 213, a first receiving module 214, and a first copy management module 215. The target storage side 220 includes a second receiving module 221, a processing module 222, a second sending module 223, and a second copy management module 224.

In this embodiment, the dividing module 211 is configured to divide source data stored on the source storage side 210 into multiple source data blocks.

The hash computation module 212 is configured to obtain, by using a hash algorithm, a hash value of each source data block obtained by using the dividing module 211.

The first sending module 213 is configured to send the hash values obtained by the hash computation module 212 to the second receiving module 221 of the target storage side 220.

The processing module 222 of the target storage side 220 determines, based on the hash values received by the second receiving module 221, whether the target storage side 220 directly generates the source data blocks or the source storage side 210 sends the source data blocks to the target storage side 220; and correspondingly generates a first feedback and a second feedback. For a basis for generating the first feedback and the second feedback by the processing module 222, refer to the data copy method in the first embodiment of the present invention. Details are not described herein again.

The second sending module 223 is configured to send the first feedback and/or the second feedback to the first receiving module 214 of the source storage side 210.

If the processing module 222 determines that the target storage side 220 directly generates the source data blocks, the second copy management module 224 directly generates the source data blocks and controls the second sending module 223 to send the first feedback to the first receiving module 214 of the source storage side 210; and the first copy management module 215 ignores the source data blocks according to the first feedback.

If the processing module 222 determines that the source storage side 210 sends the source data blocks to the target storage side 220, the second copy management module 224 controls the second sending module 223 to send the second feedback to the first receiving module 214 of the source storage side 210; and the first copy management module 215 controls, according to the second feedback, the first sending module 213 to send the source data blocks to the second receiving module 221 of the target storage side 220.

The present invention further provides a data copy management apparatus of the second embodiment, where the data copy management apparatus is described in detail on a basis of the data copy management apparatus disclosed in the first embodiment. Differences between this embodiment and the first embodiment shown in FIG. 2 are as follows:

In this embodiment, the hash computation module 212 is further configured to generate, according to the obtained hash values, a hash file corresponding to the source data, where the hash file is a set of the hash values of the multiple source data blocks. Correspondingly, the first sending module 213 is configured to send the hash file to the second receiving module 221 of the target storage side 220. The processing module 222 determines, based on the hash values in the hash file received by the second receiving module 221, whether the target storage side 220 directly generates the source data blocks or the source storage side 210 sends the source data blocks to the target storage side 220; and correspondingly generates a first feedback and a second feedback.

The present invention further provides a data copy management apparatus of the third embodiment, where the data copy management apparatus is described in detail on the basis of the data copy management apparatus disclosed in the first embodiment. Differences between this embodiment and the first embodiment shown in FIG. 2 are as follows:

In this embodiment, the processing module 222 is further configured to determine whether a hash value received by the second receiving module 221 is the same as a hash value of a predefined special data block. If the hash value received by the second receiving module 221 is the same as the hash value of the predefined special data block, the processing module 222 determines that the target storage side 220 directly generates a source data block (a special data block) corresponding to the hash value, and the processing module 222 generates a first feedback. If the hash value received by the second receiving module 221 is different from the hash value of the predefined special data block, the processing module 222 determines that the source storage side 210 sends a source data block to the target storage side 220, and the processing module 222 generates a second feedback.

The predefined special data block is an all-0 data block or an all-1 data block and is preferably stored in the processing module 222 of the target storage side 220.

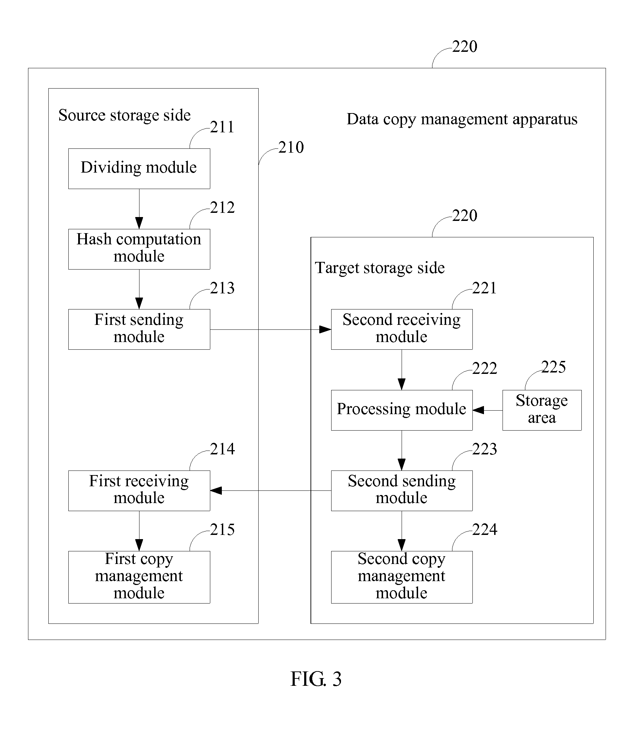

The present invention further provides a data copy management apparatus of the fourth embodiment, where the data copy management apparatus is described in detail on the basis of the data copy management apparatus disclosed in the first embodiment. As shown in FIG. 3, differences between this embodiment and the first embodiment shown in FIG. 2 are as follows:

The target storage side 220 further includes a storage area 225, which is configured to store a local data block that has already been stored on the target storage side 220 itself.

In this embodiment, the processing module 222 is further configured to determine whether a hash value received by the second receiving module 221 is the same as a hash value of the local data block stored in the storage area 225. If the hash value received by the second receiving module 221 is the same as the hash value of the local data block stored in the storage area 225, the processing module 222 determines that the target storage side 220 directly copies the local data block to generate a source data block. If the hash value received by the second receiving module 221 is different from the hash value of the local data block stored in the storage area 225, the processing module 222 determines that the source storage side 210 sends a source data block to the target storage side 220.

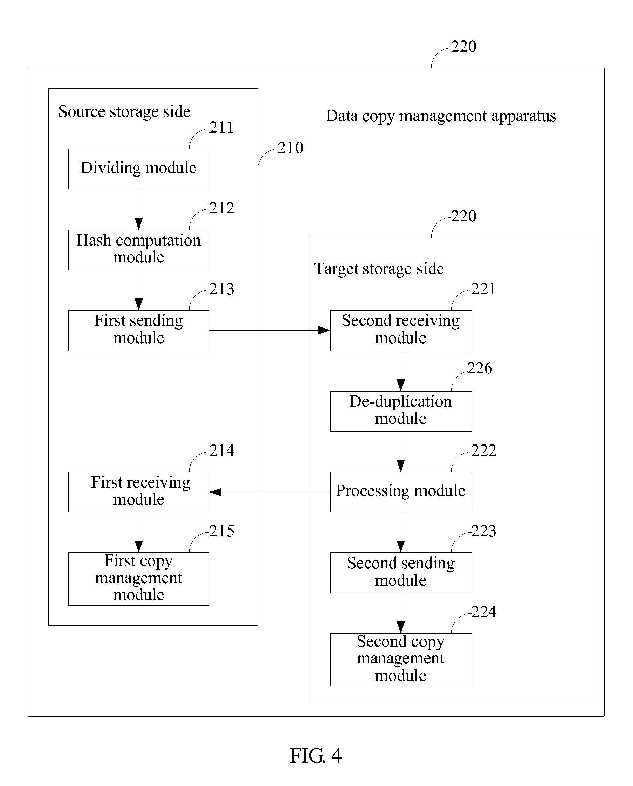

The present invention further provides a data copy management apparatus of a fifth embodiment, where the data copy management apparatus is described in detail on the basis of the data copy management apparatus disclosed in the first embodiment. As shown in FIG. 4, differences between this embodiment and the foregoing first embodiment are as follows:

The target storage side 220 in this embodiment further includes a de-duplication module 226, configured to perform data de-duplication for a hash value received by the second receiving module 221.

The processing module 222 is further configured to modify metadata information in a data de-duplication record that is of the target storage side 220 and obtained after de-duplication is performed by the de-duplication module 226, to record a mapping relationship between a received source data block and a predetermined storage area that is on the target storage side 220 and for the source data block.

Correspondingly based on the data copy methods in the foregoing embodiments, the data copy management apparatuses 200 in the foregoing several embodiments of the present invention have same technical effects. In addition, it should be understood that the disclosed data copy management apparatuses 200 may be implemented in other manners. The described module division is merely logical function division and may be other division in actual implementation. For example, multiple modules may be combined or integrated into another system, or some features may be ignored or not performed. In addition, mutual couplings or communication connections of modules may be implemented through some interfaces or be implemented in electronic or other forms.

As components of a data copy management apparatus 100, the foregoing functional modules may be or may not be physical blocks; may be located in one position or may be distributed on multiple network units; and may be implemented in a hardware form or may be implemented in a software functional block form. A part or all of the modules may be selected as required to achieve the objectives of the solutions of the present invention.

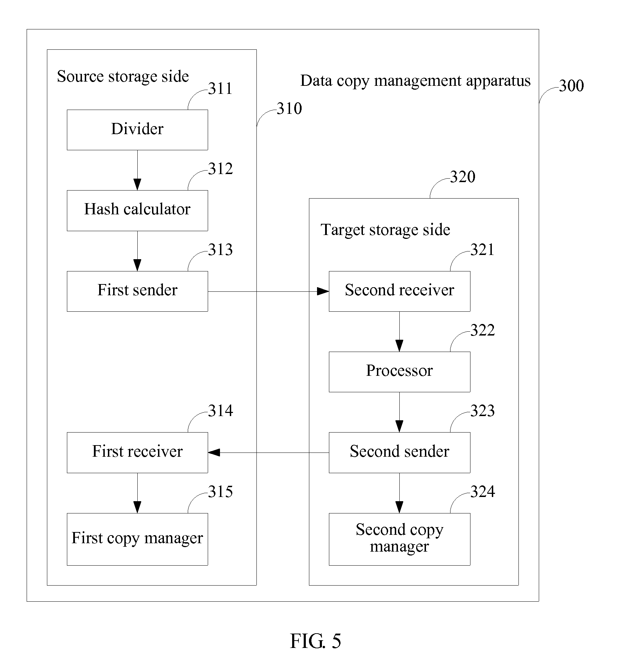

The present invention further provides a data copy management apparatus of a sixth embodiment, where the data copy management apparatus is described in detail on the basis of the data copy management apparatus disclosed in the first embodiment. As shown in FIG. 5, the data copy management apparatus 300 disclosed in this embodiment includes a source storage side 310 and a target storage side 320.

The source storage side 310 includes a divider 311, a hash calculator 312, a first sender 313, a first receiver 314, and a first copy manager 315. The target storage side 320 includes a second receiver 321, a processor 322, a second sender 323, and a second copy manager 324.

In this embodiment, the divider 311 is configured to divide source data stored on the source storage side 310 into multiple source data blocks.

The hash calculator 312 is configured to obtain, by using a hash algorithm, a hash value of each source data block obtained by using the divider 311.

The first sender 313 is configured to send the hash values obtained by the hash calculator 312 to the second receiver 321 of the target storage side 320.

The processor 322 of the target storage side 320 determines, based on the hash values received by the second receiver 321, whether the target storage side 320 directly generates the source data blocks or the source storage side 310 sends the source data blocks to the target storage side 320; and correspondingly generates a first feedback and a second feedback. For a basis for generating the first feedback and the second feedback by the processor 322, refer to the data copy method in the first embodiment of the present invention. Details are not described herein again.

The second sender 323 is configured to send the first feedback and/or the second feedback to the first receiver 314 of the source storage side 310.

If the processor 322 determines that the target storage side 320 directly generates the source data blocks, the second copy manager 324 directly generates the source data blocks and controls the second sender 323 to send the first feedback to the first receiver 314 of the source storage side 310; and the first copy manager 315 ignores the source data blocks according to the first feedback.

If the processor 322 determines that the source storage side 310 sends the source data blocks to the target storage side 320, the second copy manager 324 controls the second sender 323 to send the second feedback to the first receiver 314 of the source storage side 310; and the first copy manager 315 controls, according to the second feedback, the first sender 313 to send the source data blocks to the second receiver 321 of the target storage side 320.

In conclusion, in the present invention, a hash algorithm is adopted to obtain hash values of multiple source data blocks obtained by dividing source data; the hash values are sent to a target storage side, so that the target storage side determines, based on the received hash values, whether the target storage side directly generates the source data blocks or a source storage side sends the source data blocks to the target storage side; if a first feedback that the target storage side directly generates the source data blocks is received, where the first feedback is fed back by the target storage side, the source data blocks are ignored; and if a second feedback that the source storage side sends the source data blocks is received, where the second feedback is fed back by the target storage side, the source data blocks are sent to the target storage side. The source data is copied by classification, thereby improving a copy speed, saving CPU and network resources, and reducing copy time.

The foregoing descriptions are merely embodiments of the present invention, and the protection scope of the present invention is not limited thereto. All equivalent structural or process changes made according to the content of this specification and accompanying drawings in the present invention or by directly or indirectly applying the present invention in other relevant technical fields shall fall within the protection scope of the present invention.

## Claims

1. A data copy method, used for copying source data on a source storage side to a target storage side, wherein the method comprises:
dividing the source data on the source storage side into multiple source data blocks;
obtaining a hash value of each source data block by using a hash algorithm;
sending the hash value to the target storage side, so that the target storage side determines, based on the received hash value, whether the target storage side directly generates the source data blocks or the source storage side sends the source data blocks to the target storage side;
receiving a feedback from the target storage side;
ignoring the source data blocks if the feedback is a first feedback that the target storage side directly generates the source data blocks; and
sending the source data blocks to the target storage side if the feedback is a second feedback that the source storage side sends the source data blocks to the target storage side.

2. The copy method according to claim 1, wherein after a step of obtaining a hash value of each source data block by using a hash algorithm, the method comprises:
generating, according to the hash values, a hash file corresponding to the source data, wherein the hash file is a set of the hash values of the multiple source data blocks; and
a step of sending the hash values to the target storage side comprises:
sending the hash file to the target storage side.

3. The copy method according to claim 1, wherein a step of sending the hash values to the target storage side comprises:
sending the hash values to the target storage side, so that the target storage side determines whether the received hash values are the same as a hash value of a predefined special data block; if the received hash values are the same as the hash value of the predefined special data block, determining that the target storage side directly generates the source data blocks; and if the received hash values are different from the hash value of the predefined special data block, determining that the source storage side sends the source data blocks to the target storage side.

4. The copy method according to claim 3, wherein the predefined special data block is an all-0 data block or an all-1 data block.

5. The copy method according to claim 1, wherein a step of sending the hash values to the target storage side comprises:
sending the hash values to the target storage side, so that the target storage side determines whether the received hash values are the same as a hash value of a local data block stored on the target storage side; if the received hash values are the same as the hash value of the local data block stored on the target storage side, determining that the target storage side directly generates the source data blocks; and if the received hash values are different from the hash value of the local data block stored on the target storage side, determining that the source storage side sends the source data blocks to the target storage side.

6. A data copy management apparatus, configured to copy source data on a source storage side to a target storage side, wherein the apparatus comprises:
a dividing module, configured to divide the source data on the source storage side into multiple source data blocks;
a hash computation module, configured to obtain a hash value of each source data block by using a hash algorithm;
a sending module, configured to send the hash values to the target storage side, so that the target storage side determines, based on the hash values, whether the target storage side directly generates the source data blocks or the source storage side sends the source data blocks to the target storage side;
a receiving module, configured to receive a feedback from the target storage side; and
a copy management module, configured to ignore the source data blocks if the feedback is a first feedback that the target storage side directly generates the source data blocks, and control the sending module to send the source data blocks to the target storage side if the feedback is a second feedback that the source storage side sends the source data blocks to the target storage side.

7. The apparatus according to claim 6, wherein the hash computation module is further configured to generate, according to the obtained hash values, a hash file corresponding to the source data, wherein the hash file is a set of the hash values of the multiple source data blocks; and the sending module is configured to send the hash file to the target storage side.

8. A data copy method, used for copying source data on a source storage side to a target storage side, wherein the method comprises:
receiving hash values of source data blocks obtained by dividing the source data on the source storage side;
determining, based on the received hash values, whether the target storage side directly generates the source data blocks or the source storage side sends the source data blocks to the target storage side;
if it is determined that the target storage side directly generates the source data blocks, generating, by the target storage side, the source data blocks directly and sending a first feedback to the source storage side to instruct the source storage side to ignore the source data blocks; and
if it is determined that the source storage side sends the source data blocks to the target storage side, sending a second feedback to the source storage side to instruct the source storage side to send the source data blocks to the target storage side.

9. The copy method according to claim 8, wherein a step of receiving hash values of source data blocks obtained by dividing the source data on the source storage side comprises:
receiving a hash file, wherein the hash file is a set of the hash values of the multiple source data blocks obtained by dividing the source data on the source storage side.

10. The copy method according to claim 8, wherein a step of determining, based on the received hash values, whether the target storage side directly generates the source data blocks or the source storage side sends the source data blocks to the target storage side comprises:
determining whether the received hash values are the same as a hash value of a predefined special data block; if the received hash values are the same as the hash value of the predefined special data block, determining that the target storage side directly generates the source data blocks; and if the received hash values are different from the hash value of the predefined special data block, determining that the source storage side sends the source data blocks to the target storage side.

11. The copy method according to claim 10, wherein the predefined special data block is an all-0 data block or an all-1 data block.

12. The copy method according to claim 10, wherein the step of determining, based on the received hash values, whether the target storage side directly generates the source data blocks or the source storage side sends the source data blocks to the target storage side comprises:
determining whether the received hash values are the same as a hash value of a local data block stored on the target storage side; if the received hash values are the same as the hash value of the local data block stored on the target storage side, determining that the target storage side directly generates the source data blocks; and if the received hash values are different from the hash value of the local data block stored on the target storage side, determining that the source storage side sends the source data blocks to the target storage side.

13. The copy method according to any one of claims 10 to 12, wherein a step of directly generating, by the target storage side, the source data blocks comprises:
copying the predefined special data block or the stored local data block to a predetermined storage area of the source data blocks or modifying metadata information in a data de-duplication record on the target storage side, to record a mapping relationship between the predetermined storage area of the source data blocks and the predefined special data block or record a mapping relationship between the predetermined storage area of the source data blocks and the stored local data block.

14. A data copy management apparatus, configured to copy source data on a source storage side to a predetermined storage area of a target storage side, wherein the apparatus comprises:
a receiving module, configured to receive hash values of source data blocks obtained by dividing the source data on the source storage side;
a processing module, configured to determine, based on the hash values received by the receiving module, whether the target storage side directly generates the source data blocks or the source storage side sends the source data blocks to the target storage side;
a sending module, configured to send a feedback to the source storage side; and
a copy management module, configured to: when the processing module determines that the target storage side directly generates the source data blocks, directly generate the source data blocks, and control the sending module to send a first feedback to the source storage side to instruct the source storage side to ignore the source data blocks; and when the processing module determines that the source storage side sends the source data blocks to the target storage side, control the sending module to send a second feedback to the source storage side to instruct the source storage side to send the source data blocks to the receiving module.

15. The apparatus according to claim 14, wherein the receiving module is further configured to receive a hash file, wherein the hash file is a set of the hash values of the multiple source data blocks obtained by dividing the source data on the source storage side.

16. The apparatus according to claim 14, wherein the processing module is further configured to: determine whether the received hash values are the same as a hash value of a predefined special data block; if the received hash values are the same as the hash value of the predefined special data block, determine that the target storage side directly generates the source data blocks; and if the received hash values are different from the hash value of the predefined special data block, determine that the source storage side sends the source data blocks to the target storage side.

17. The apparatus according to claim 16, wherein the predefined special data block is an all-0 data block or an all-1 data block.

18. The apparatus according to claim 14, wherein the processing module is further configured to: determine whether the received hash values are the same as a hash value of a local data block stored on the target storage side; if the received hash values are the same as the hash value of the local data block stored on the target storage side, determine that the target storage side directly generates the source data blocks; and if the received hash values are different from the hash value of the local data block stored on the target storage side, determine that the source storage side sends the source data blocks to the target storage side.

19. The apparatus according to claims 16 to 18, wherein the processing module is further configured to copy the predefined special data block or the stored local data block to the predetermined storage area of the source data blocks or modify metadata information in a data de-duplication record on the target storage side, to record a mapping relationship between the predetermined storage area of the source data blocks and the predefined data block or record a mapping relationship between the predetermined storage area of the source data blocks and the stored local data block.
